(19)

Europäisches Patentamt
European Patent Office
Office européen des brevets

(11) **EP 2 563 030 A1**

(12) **EUROPEAN PATENT APPLICATION**

(43) Date of publication:
27.02.2013 Bulletin 2013/09

(51) Int Cl.:
*H04N 21/262* (2011.01)

(21) Application number: 11306067.7

(22) Date of filing: 26.08.2011

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME

(71) Applicant: Thomson Licensing
92130 Issy-les-Moulineaux (FR)

(72) Inventors:
• Lundgren, Henrik
92350 Le Plessis Robinson (FR)
• Salonidis, Theodoros
75013 Paris (FR)
• Chan, An
DAVIS, CA California 95616 (US)

(74) Representative: Lindemann, Robert
Deutsche Thomson OHG
European Patent Operations
Karl-Wiechert-Allee 74
30625 Hannover (DE)

(54) **Method for multiplexing multiple video sources on a medium**

(57)    There is provided a computer-implemented method for multiplexing multiple video sources. The method includes streaming a first video. The method also includes determining a start-up delay for a second video such that an aggregated peak streaming rate of the first video and the second video is minimized. Further, the method includes starting streaming of the second video after the start-up delay.

FIG. 1

EP 2 563 030 A1

**Description**

**BACKGROUND**

Internet traffic includes a great deal of video data. Current projections estimate that in the near future, approximately half of the video traffic will be 3D or 2D High Definition (HD). A high fraction of HD video traffic may be consumed by users that access systems and networks, including Wireless Local Area Networks (WLANs) in homes, enterprises, or public spaces. This trend is being fueled by two technology trends: video streaming technology standards, and WLAN standards. Recent video streaming technology standards such as H.264/MPEG-4 part 10 AVC reduce HD video bandwidth using Variable Bit Rate (VBR) video encoding. Further, the IEEE 802.11 n WLAN standard accommodates wireless physical-layer (PHY) data rates up to 600 Mbps using Multiple-Input Multiple-Output (MIMO) antenna technologies.
Despite these advances, streaming video, including High Definition (HD) video, remains challenging. VBR technologies reduce the average video streaming rate by efficient encoding of slow or moderate motion in individual scenes. However, the potential peak streaming rate is still determined by the full quality encoding of fast-motion scenes. Also, the achieved goodput in practical 802.11 n WLAN deployments may be below the potential 802.11 PHY data rates due to: the lack of favorable channel conditions for high MIMO PHY rates, MAC protocol overhead, sub-optimal PHY data rate selection, interference, and backward compatibility with the previous lower-rate 802.11 standards.

**BRIEF DESCRIPTION OF THE DRAWINGS**

Certain exemplary embodiments are described in the following detailed description and in reference to the drawings, in which:

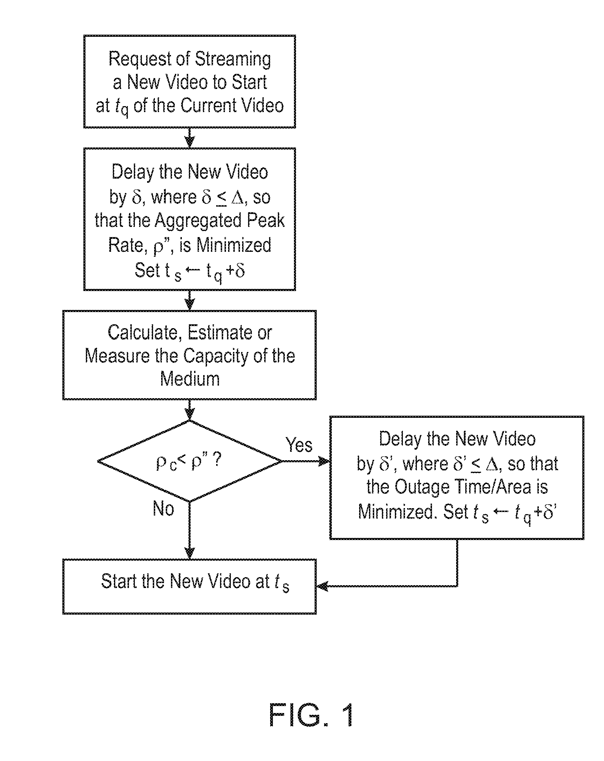

Fig. 1 is a process flow diagram of shifting the starting time of an incoming video, in accordance with an exemplary embodiment of the invention.

**DETAILED DESCRIPTION**

This invention considers a medium shared by one or more video streams. The medium may include a wired or wireless link, network, or system. When multiple video streams exist on the medium, their aggregated stream can have a very high peak rate, especially when these streams are HD video streams. Further, the higher peak rate may exceed the capacity of the medium carrying the video streams.
In one embodiment, a strategic shifting multiplexing technique may be used. In this multiplexing technique, the starting times of the video stream waveforms may be strategically shifted such that the peak rate of the aggregate stream is reduced or minimized. This technique may be enhanced with two other shifting techniques that reduce outage time or outage area with respect to a channel capacity target.
If a new video session $v_2$ of duration $D_2$ is requested to start at time $t_q$ of an ongoing video session $v_1$ of duration $D_1$, this technique may delay the start of $v_2$ for $\delta$ seconds after $t_q$. The parameter $\delta$ may not exceed a delay budget of $\Delta$ seconds. The budget may represent a user-specified limit to a start-up delay. Given the two video waveforms $f_{v1}$ (t) and $f_{v2}(t)$, the peak aggregate streaming rate $\phi(t_q, \delta)$ when $v_2$ starts $\delta$ seconds after time $t_q$ of $v_1$ is given by Equation 1:

$$\Phi\big(t_q, \delta\big) = \begin{cases} \displaystyle\max_{0 \leq t \leq t_{r_1}} \big[f_{v_1}\big(t + t_q + \delta\big) + f_{v2}(t)\big], \ \mathrm{t_{r_1}} \leq D_2 \\ \displaystyle\max_{0 \leq t \leq D_2} \big[f_{v_1}\big(t + t_q + \delta\big) + f_{v2}(t)\big], otherwise \end{cases}, \qquad (1)$$

where $t_{r_1}$ is the remaining time $D_1 - (t_q + \delta)$ of video $v_1$. A $\delta$' may be found in [0, $\Delta$], which yields the minimum aggregated peak rate $\phi(t_q, \delta)$. The variable, $\delta$' , is represented by Equation 2:

$$\delta \ ' \ = \ \underset{0 \leq \delta \leq \Delta}{\arg\min} \ \phi(t_q, \ \delta), \qquad (2)$$

If there are more than two incoming videos, one of the videos may be randomly selected to multiplex with the existing video stream using strategic shifting multiplexing. A second video among the incoming videos may then also be selected and multiplexed with the current aggregate stream, and so forth until all incoming video streams are multiplexed.
Fig. 1 is a process flow diagram of shifting the starting time of an incoming video, in accordance with an exemplary embodiment of the invention. The incoming streams may be multiplexed sequentially, one by one. In this way, the strategic shifting is repeatedly applied by treating the earlier videos as a single aggregated stream and multiplexing one new video at a time.

Strategic shifting may reduce the peak video streaming rate, but there is still a risk that the capacity of the medium carrying the streams may be exceeded during video streaming. In other words, the channel capacity target $\rho_c$ may be exceeded. The capacity target parameter can be the average, maximum or most recent capacity measured on the medium during the streaming of the existing videos.

If the aggregated peak rate $\rho$" returned by strategic shifting exceeds the channel capacity $\rho_c$, a new $\delta$' may be selected to reduce the outage time or outage area. The outage time $O_t(\delta)$ is the total time in which the aggregated streaming rate exceeds the channel capacity target $\rho_c$. The outage area, $O_a(\delta)$ is the area between the waveform of the aggregated streaming rate and the channel capacity target $\rho_c$. The outage area represents the total number of bits that need to be buffered or dropped if the channel capacity target is exceeded and may be represented as shown in Equation 3:

$$O_a(\delta) = \int_0^{\max(t_{r1},D_2)} [f_{v1}(t + t_q + \delta) + f_{v2}(t) - \rho_c]dt$$

$$(3)$$

It is noted that Fig. 1 shows that the method is run in two stages. In the first stage, the start time of the incoming video is computed so that the aggregate peak rate of this video and currently streaming videos is reduced or minimized. Then, the capacity of the medium is calculated, estimated, or measured. If the aggregate peak rate is higher than the capacity, the second stage of the method is executed to reduce or minimize the effect of an outage resulting from exceeding the capacity. Further, in the second stage, a new starting time of the incoming video is determined that reduces or minimizes either the outage area or the outage time. The outage area between the aggregate peak rate and the capacity of the medium may represent the amount of video traffic that needs to be dropped or buffered in order to absorb the outage. The outage time may represent the total time duration during which the aggregate peak rate becomes higher than the capacity of the medium over time. An alternative to reducing the outage area or outage time may be to avoid the outage by not multiplexing the incoming video stream that causes the medium capacity to be exceeded. In one embodiment, a request to stream a new video that causes the capacity to be exceeded may be rejected.

An implementation of the strategic shifting multiplexing technique in a 802.11 n WLAN system, reduced the aggregated peak rate of multiple streaming HD videos. In this implementation, an exhaustive search was used to solve Equation 2, providing, a $\delta$' that reduced the aggregated peak rate. The computation delay and the quality of the solution of this implementation depended on the granularity of $\delta$, the delay budget $\Delta$, and the length of the streaming videos.

This technique was tested on four video clips whose lengths range from 72s to 2.5 minutes, with peak streaming rates ranging from 14.54 Mbps to 26.12 Mbps. A granularity of 0.2s was used for $\delta$, and the technique was tested with delay budgets of $\Delta$ = 5s and $\Delta$ = 10s, respectively.

At each experiment, a video was started, and within the first five seconds a time was randomly scheduled where one, two, or three other videos were requested to start streaming simultaneously.

In all experiments, the strategic shifting technique multiplexed any two streams within one second. The strategic shifting multiplexing provided an aggregated peak rate reduction between 15% and 25% compared to the case where no shift is applied. Thus, a $\delta$ granularity of 0.2s achieved a benefit. A $\delta$ granularity less than 0.2s might reduce the aggregated peak rate further, but it would also incur higher computation delay. At larger granularities of 0.5s and 1 s significant peak rate reduction was achived in comparison to the case where no shift is applied.

A larger $\Delta$ allows strategic shifting multiplexing to further reduce peak rate. This effect was enhanced as the number of videos was increased. With $\Delta$ = 10s, a lower aggregated peak rate was provide than with $\Delta$ = 5s, when four videos are multiplexed.

Outage time and area reduction was also tested in an example implementation. Each experiment consisted of two back-to-back runs, where two 2.5-minute HD videos were streamed together on a link. The experiments were carried out when the client is in a location with low channel quality.

In the first run, the two videos were multiplexed using outage reduction shifting with $\Delta$ = 5s and $\delta$ search granularity of 0.2s. In the second run, no shifting was applied. Each experiment was repeated ten times and performed at different PHY rates.

Outage reducing shifting strategies for outage time and outage area resulted in a 20% to 50% reduction in packet loss rates compared to the no-shift case. At some PHY rates, which achieve the capacity of the wireless link, this shifting removed all losses. Similar to strategic shifting multiplexing, if a larger delay budget was used, and a smaller granularity, the outage reducing shifting reduced the loss rate further, at the cost of higher computation time.

The strategic shifting multiplexing aims at reducing peak streaming rate in the case of multiple streams. There is a body of work that considers smoothing VBR video streaming by decoupling the VBR video streaming rate from the actual transmission rate. These schemes typically use a priori knowledge about the video stream to schedule pre-fetching of packets to the buffer to lower streaming peak rate and variance. The strategic shifting multiplexing also uses video stream information, but differs in that it does not change the transmission scheduling from the server. Strategic shifting multiplexes several video streams, whereas smoothing typically considers only a single video. Moreover, recent work has shown that VBR traffic characteristics after smoothing exhibits significant variability with H.264 compared to older encoding standards. Strategic shifting is therefore complementary to VBR smoothing since such shifting is still useful after smoothing has been applied.

**Claims**

1.  A computer-implemented method of multiplexing multiple video sources, comprising:

    streaming a first video;
    determining a start-up delay for a second video such that an aggregated peak streaming rate of the first video and the second video is minimized; and
    starting streaming of the second video after the start-up delay.

2.  The method recited in claim 1, comprising:

    determining a capacity of a medium over which the first video and second video are streaming;
    determining that the aggregated peak streaming rate exceeds the capacity during streaming of the first video and the second video;
    determining a new start-up delay such that a difference metric between the aggregated peak streaming rate and the capacity is minimized; and starting streaming of the second video after the new start-up delay.

3.  The method recited in claim 1, comprising:

    determining a capacity of a medium over which the first video and second video are streaming;
    determining that the aggregated peak streaming rate exceeds the capacity
    during streaming of the first video and the second video; and determining a new start-up delay such that a time metric in which the
    aggregated peak streaming rate exceeds the capacity, is minimized; and
    starting streaming of the second video after the new start-up delay.

4.  The method recited in claim 1, comprising:

    determining a capacity of a medium over which the first video and second video are streaming;
    determining that the aggregated peak streaming rate exceeds the capacity during streaming of the first video and the second video; and rejecting a request to stream the second video.

Request of Streaming
a New Video to Start
at $t_q$ of the Current Video

Delay the New Video
by $\delta$, where $\delta \leq \Delta$, so
that the Aggregated Peak
Rate, $\rho''$, is Minimized
Set $t_s \leftarrow t_q + \delta$

Calculate, Estimate or
Measure the Capacity of the
Medium

$\rho_c < \rho''$ ?

Yes

No

Delay the New Video
by $\delta'$, where $\delta' \leq \Delta$, so that
the Outage Time/Area is
Minimized. Set $t_s \leftarrow t_q + \delta'$

Start the New Video at $t_s$

FIG. 1

Europäisches
Patentamt
European
Patent Office
Office européen
des brevets

# EUROPEAN SEARCH REPORT

Application Number

EP 11 30 6067

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/084896 A1 (FLEURY JEAN-FRANCOIS [CN] ET AL) 10 April 2008 (2008-04-10) * paragraphs [0006], [0036], [0038], [0044] - [0058], [0066], [0093]; figures 3-7 * ----- | 1-4 | INV. H04N21/262 |
| A | US 7 337 231 B1 (LI FULU [CA]) 26 February 2008 (2008-02-26) * column 2, line 51 - column 3, line 12; figure 8 * ----- | 1-4 | |

TECHNICAL FIELDS
SEARCHED    (IPC)

H04N

The present search report has been drawn up for all claims

| Place of search | Date of completion of the search | Examiner |
|---|---|---|
| Berlin | 9 February 2012 | Raeymaekers, Peter |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

**ANNEX TO THE EUROPEAN SEARCH REPORT
ON EUROPEAN PATENT APPLICATION NO.**

EP 11 30 6067

This annex lists the patent family members relating to the patent documents cited in the above-mentioned European search report.
The members are as contained in the European Patent Office EDP file on
The European Patent Office is in no way liable for these particulars which are merely given for the purpose of information.

09-02-2012

| Patent document cited in search report | | Publication date | Patent family member(s) | | Publication date |
|---|---|---|---|---|---|
| US 2008084896 | A1 | 10-04-2008 | CN | 101102474 A | 09-01-2008 |
| | | | EP | 1874061 A1 | 02-01-2008 |
| | | | FR | 2903259 A1 | 04-01-2008 |
| | | | JP | 2008011538 A | 17-01-2008 |
| | | | KR | 20080001658 A | 03-01-2008 |
| | | | US | 2008084896 A1 | 10-04-2008 |
| US 7337231 | B1 | 26-02-2008 | NONE | | |

EPO FORM P0459

For more details about this annex : see Official Journal of the European Patent Office, No. 12/82